# EUROPEAN PATENT SPECIFICATION

(11) **EP 3 753 795 B1**
(45) Date of publication and mention of the grant of the patent: **21.09.2022**
(21) Application number: 19181408.6
(22) Date of filing: 20.06.2019
(51) Int. Cl.: B60T 17/08, F16D 65/28

(54) **LOCKING ELEMENT OF A BRAKE ACTUATOR HOUSING**
VERRIEGELUNGSELEMENT EINES BREMSAKTUATORGEHÄUSES
ÉLÉMENT DE VERROUILLAGE D'UN BOÎTIER D'ACTIONNEUR DE FREIN

(43) Date of publication of application: 23.12.2020
(73) Proprietor: ZF CV Systems Europe BV, 1170 Brussels (BE)
(72) Inventor: ZBYLUT, Michal, 42-400 Zawiercie (PL); GAWLIK, Rafal, 51-315 Wroclaw (PL)
(74) Representative: Rabe, Dirk-Heinrich

(56) References cited:
- EP-A1- 0 226 712
- EP-B1- 0 226 712
- WO-A1-2008/027018
- WO-A1-2013/050329
- WO-A1-2015/043634
- FR-A1- 2 683 286
- US-A- 5 315 918
- US-A1- 2005 046 186

## Description

The present invention relates to a brake actuator housing, in particular a spring brake actuator housing, comprising: a first housing part having a longitudinal axis and a number of first bayonet locking members preferably arranged on an outer circumferential surface of the first housing part, the outer circumferential surface preferably being symmetrically formed around the longitudinal axis, and a second housing part having a number of second bayonet locking members that preferably correspond to the number of first bayonet locking members of the first housing part and are preferably arranged on an inner circumferential surface of the second housing part, wherein the bayonet locking members are configured to engage one another in a positive fit, preferably when the inner circumferential surface of the second housing part is coaxially arranged to the outer circumferential surface of the first housing part in a coupled state.

Brake actuator housings of the aforementioned type are used in the automotive industry and in particular in the truck industry as housings for spring brake actuators. In operation, these actuator housings accordingly are subjected to large positive pressures inside the housings and to large forces caused by spring tension that also effects the connection of the housing parts. Mechanical failure may lead to an unwanted disintegration of the housing parts. In order to ensure correct functioning of the brake system, it is of particular importance to securely lock the housing parts with respect to each other.

In the prior art, securing of the housing parts with respect to each other has been achieved for example with bayonet couplings. Housing parts are coupled together in a bayonet-type locking arrangement often by moving the housing parts axially towards each other, and then rotating the housing parts relative to each other, wherein bayonet tabs are moved to engage mating recesses of the respective other housing part.

A two-part brake actuator housing which features a bayonet coupling between two housing parts is for example disclosed in DE 10 2008 053 459 A1.

With known brake actuator housings of the aforementioned type, special attention needs to be paid to securing the housing parts in their coupled state. If the brake actuator housings are opened, either by accident or on purpose, while the interior of the housing is subject to positive pressure or large force actuating upon parts of the housing, significant damage can be caused to the brake actuator itself, and - more importantly - to the person or persons opening the housing. Fatal injuries may be the result.

Known solutions to this problem have thus far suggested providing a locking screw which is installed on the periphery of the housing in order to prevent the housing parts from rotating. This locking screw is installed after fully coupling the bayonet locking members. By ensuring that the housing parts remain together, risk of injury is excluded.

The known solution provides an appropriate locking of the brake actuator housing but requires narrow fabrication tolerances that can hardly be realized. For example, deviations in diameter of the housing parts or the geometry of the bayonet locking members can result in inappropriate engagement of the locking screw. Further, the housing parts engaged by the locking screw can be damaged after removing the screw.

US 2005/046186 A1 shows a coupling for use as a housing in engines, especially in turbine engines. The coupling includes first housing part and a second housing part. Keys inserted into keyway which are part of the first and second housing part and prevent relative rotation of the first and second housing part. WO2015/04634 A1 relates to a locking device of a brake actuator. The brake actuator is divided into a first and second housing part whereby the housing parts engaging each other in a bayonet coupling. The first housing part comprises a flange and the second housing part comprises a collar. The first and second housing parts overlap so as to completely cover at least the first flank of locking device. The locking device is out of sheet metal.

WO2013/050329 A1 relates to a spring brake actuator with two housing parts. A bayonet coupling and a ring seal couples both hosing parts. A recess is provided in the bottom of the bayonet coupling for accommodating at least one end section of the ring seal. A separate locking element is not provided which prevents a relative rotation and an axial movement of the housing parts.

WO2008/027018 A1 describes a spring brake actuator too. A bayonet connection connects a spring brake chamber and a service brake chamber via peripheral bolts. Dagger holes placed at certain intervals on an adapter plate of second housing part. Dagger inserted in the dagger holes and apply forces to a connection section of the first housing part in this manner and combine the adapter plate of the second housing part with the canister of the first housing part.

Thus, there is still a risk that the housing parts accidentally separate from each other during assembly or in use and therefore a need to provide a secure and inexpensive brake actuator housing that can be disassembled without damaging the housing parts.

Accordingly, it has been an object of the present invention to suggest a brake actuator housing providing a more secure and yet still simple assembly and disassembly.

In one aspect, the invention solves the underlying problem for a brake actuator housing of the initially mentioned type by suggesting that, the first and the second housing parts are formed such that they define a recess (meaning at least one recess) between them in the coupled state, the recess being externally accessible, and the brake actuator housing comprises a locking element that is dimensioned such that it fits in the recess, locking the first and the second housing part in the coupled state. The invention is based upon the realization that locking the first and the second housing part by a locking element that fits into a recess provides high safety by avoiding incorrect assembly: The locking element can only be inserted if the housing parts are correctly positioned with respect to one another, since incorrect parts or incorrect positioning immediately becomes obvious to the operator once he or she has trouble inserting the looking element. This mechanism helps an equipment operator when assembling the brake actuator housing to avoid mistake. Thus, product defects are eliminated by preventing human errors.

It will be understood, that a recess that is only formed the first and the second housing part in a coupled state, cannot be regressed as long as the locking element is arranged in it.

In a particularly preferred embodiment, the locking element is engaged with the first and the second housing parts in the coupled state in a positive fit and/or in a non-positive fit. Thus, the invention advantageously recognizes that by engaging the locking element with the housing parts in a positive fit and a non-positive fit provides a safe locking even during operation of the brake actuator. The non-positive fit, in particular a frictional engagement, between the locking element and the housing parts securely locks the housing parts in a coupled state of the brake actuator housing. The engagement of the first and the second housing part and the locking element in the coupled state in a positive fit further advantageously provides an additional securement and ensures that a wrong assembling of the housing parts is avoided.

Preferably, the locking element is engaged with at least two adjacent bayonet locking members of the first and second housing parts in the coupled state in a positive fit. Thus, the invention advantageously recognizes that by engaging at least two adjacent bayonet locking members of the first and second housing parts the forces acting on the locking element are more evenly distributed resulting in an increased lifetime.

In a further preferred embodiment, the recess is defined by the space between two adjacent bayonet locking members of the first and the second housing parts in the coupled state. Thus, when positioning the locking element in the recess, any mutual movement in circumferential direction of the bayonet locking members is avoided. Accordingly, the brake actuator housing is secured in its coupled state.

Preferably, the recess has a width that is defined by the distance of the two adjacent bayonet locking members of the first and the second housing parts in the circumferential direction. Thus, by filling the whole distance between the two adjacent bayonet locking members of the first and the second housing parts avoids any mutual movement in circumferential direction.

Preferably, the recess has a height that is defined by the sum of the height of the bayonet locking member of the first housing part plus the height of the corresponding bayonet locking of the second housing part in the axial direction. By filling the height of the recess defined by the height of the bayonet locking members there is a contact surface provided between the locking element and the side face surfaces of the bayonet locking members defining the height of the recess and accordingly any circumferential movement is avoided. The axial direction in this specification is understood to refer to the direction of the longitudinal axis of the actuator.

Further preferably, the recess has a depth that is defined by the first and second housing parts in the radial direction in the space between two adjacent bayonet looking members in the complete state.

The invention solves the problem by suggesting that, the locking element comprises or consists of an elastic and preferably expandable material, configured to be inserted in the recess in a collapsed state and to lock the first and the second housing part in an expanded state of the locking element. Thus, by providing a locking element that comprises or consists of an elastic and preferably expandable material, the invention advantageously recognizes that by expanding the locking element in the coupled state of the brake actuator housing, the locking element engages the bayonet locking members in a positive fit avoiding any movement in axial and circumferential direction and at the same time engaging the first and the second housing part in a non-positive fit and in particular by a frictional engagement.

Preferably, the locking element has a retention member configured to securely attach the locking element to the first housing part and/or the second housing part. Thus, the invention advantageously recognizes that a retention member configured to securely attach the locking element to the first and/or second housing part provides a cost-effective and easy to handle solution not to lose the locking element during assembling and maintenance.

Preferably, the number of first bayonet locking members is evenly distributed on the outer circumferential surface and the number of second bayonet locking members is evenly distributed on the inner circumferential surface, defining a number of recesses between each two adjacent first bayonet locking members being engaged with the corresponding second bayonet locking members in the coupled state. The invention advantageously recognizes that, by providing evenly distributed bayonet locking members, a number of evenly formed recesses is defined between the first and second bayonet locking members of the first and second housing parts in the coupled state of the brake actuator housing.

The invention has herein above been described in a first aspect will respect to a brake actuator housing.

In a second aspect, the invention also relates to method for assembling a brake actuator housing, in particular a brake actuator housing according to the preferred embodiments of the invention described above, wherein the brake actuator housing comprises: a first housing part having a longitudinal axis and a number of first bayonet locking members preferably arranged on an outer circumferential surface of the first housing part, the outer circumferential surface being preferably symmetrically formed around the longitudinal axis, and a second housing part having a number of second bayonet locking members that preferably correspond to the number of first bayonet locking members of the first housing part and are preferably arranged on an inner circumferential surface of the second housing part.

According to the second aspect, wherein the first and the second housing parts are formed such that they define a recess between them in the coupled state, the recess being externally accessible, a locking element that is dimensioned such that it fits in the recess, the invention achieves the initially mentioned object in that the method comprises the steps: moving the first housing part towards the second housing part in the longitudinal axis, preferably direction, such that the inner circumferential surface of the second housing part is coaxially arranged the outer circumferential surface of the first housing part, rotating the first housing part relative to the second housing part around the longitudinal axis, such that the bayonet locking members engage one another in a positive fit, and the first and the second housing parts are coupled together in a coupled state of the brake actuator housing, inserting the locking element in the recess formed between the first and the second housing part in the coupled state such that the locking element locks the first and the second housing part in the coupled state. The examples and preferred embodiments of the brake actuator housing of the first aspect as described above are also the preferred examples and preferred embodiments of the method for assembling such a brake actuator housing and vice versa.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

Herein,
- Fig. 1:: illustrates a brake actuator housing schematically in an uncoupled state in a perspective view,
- Fig. 2:: illustrates the brake actuator housing according to Fig. 1 schematically in an uncoupled state upon linear movement of a second housing part towards a first housing part in a perspective view,
- Fig. 3:: illustrates the brake actuator housing according to Fig. 1 schematically upon rotational locking movement in a coupled state in a perspective view,
- Fig. 4:: illustrates the brake actuator housing according to Fig. 1 schematically in a coupled state secured by a locking element in a perspective view,
- Fig. 5: illustrates a detailed view of a preferred embodiment of a locking element for the brake actuator housing according to Fig. 1,
- Fig. 6: illustrates a detailed view of an alternative preferred embodiment of a locking element for the brake actuator housing according to Fig. 1,
- Fig. 7: illustrates a detailed view of an alternative preferred embodiment of a locking element for the brake actuator housing according to Fig. 1,
- Fig. 8: illustrates a detailed view of an alternative preferred embodiment of a locking element for the brake actuator housing according to Fig. 1, and
- Fig. 9: illustrates a detailed view of an alternative preferred embodiment of a locking element for the brake actuator housing according to Fig. 1.

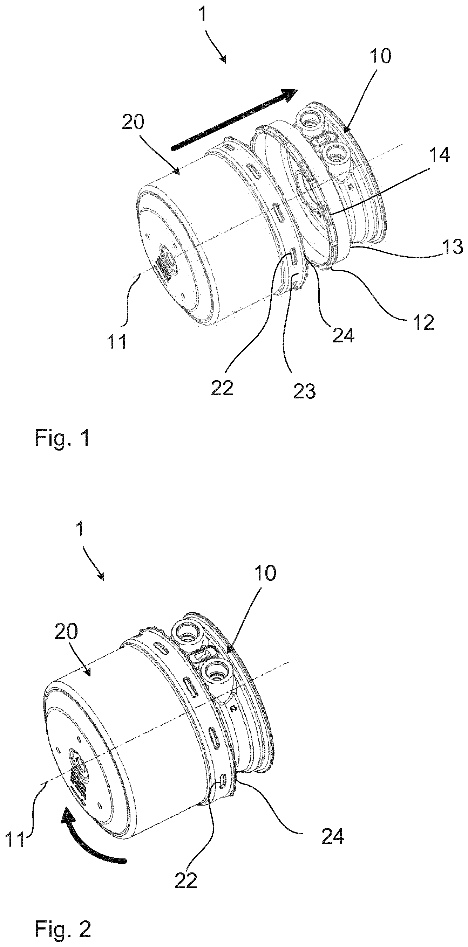

Fig. 1 illustrates a brake actuator housing in an uncoupled position.

The brake actuator housing 1 comprises a first housing part 10 and a second housing part 20 configured to be engaged with each other in a coupled state of the brake actuator housing 1.

The first housing part 10 is at least partly cylindrically formed around a longitudinal axis 11. The first housing part 10 comprises a number of first bayonet locking members 12 that are arranged on a collar 13 of the first housing part 10 and in particular on an outer circumferential surface 14 of the collar 13.

According to this embodiment, the first bayonet locking members 12 are evenly distributed on the outer circumferential surface 14.

The second housing part 20 comprises a number of second bayonet locking members 22 arranged on a flange 23 and in particular on an inner circumferential surface 24 of the flange 23. The second housing part 20 is also at least partly cylindrically formed and coaxially arranged to the first housing part 10.

In order to engage the first housing part 10 with the second housing part 20 of the brake actuator housing 1, the second housing part 20 is moved towards the first housing part 10 in the direction of the longitudinal axis 11. The number of bayonet locking members 22 of the second housing part 20 are then moving past the number of bayonet locking members 12 of the first housing part 10. The width of the second bayonet locking members 22 of the second housing part 20 corresponds to the distance defined between two adjacent bayonet locking members 12 of the first housing part 10 in circumferential direction. Thus, the second bayonet locking members 22 of the second housing part 20 can easily move past the first bayonet locking members 12 of the first housing part 10.

Fig. 2 illustrates the brake actuator housing according to Fig. 1 schematically still in an uncoupled state upon a linear movement of the second housing part 20 along the longitudinal axis 11 towards the first housing part 10 in a perspective view.

The first housing part 10 and the second housing part 20 are coaxially arranged with regard to the longitudinal axis 11 and the first housing part 10 is at least partly in contact with the second housing part 20. In this position, upon a rotational movement around the longitudinal axis 11 from the second housing part 20 relative to the first housing part 10, the bayonet locking members 22 are engaged with the bayonet locking members 12 of the first housing element 10 in a positive fit.

In order to engage the first locking members 12 with the second locking members 22, the second housing part can be either rotated in a positive rotating direction or in a negative rotating direction around the longitudinal axis 11 relative to the first housing part 10.

The engagement is based on the idea that when rotating the second housing part 20 relative to the first housing part 10 the first and second bayonet locking members 12, 22 will be engaged with each other such that they define a recess (not shown) between two adjacent pairs of first and second locking members 12, 22 being engaged with each other.

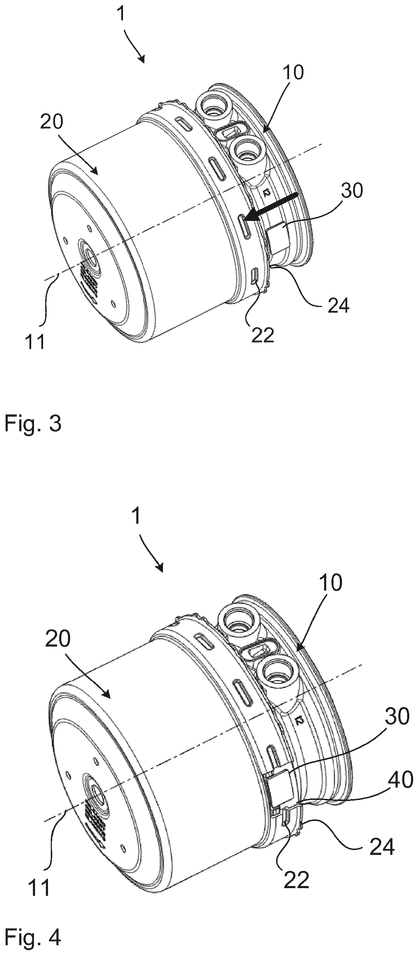

Fig. 3 illustrates the brake actuator housing according to Fig. 1 schematically upon rotational locking movement of the second housing part 20 around the longitudinal axis 11 relative to the first housing part 10.

In particular, Fig. 3 illustrates the coupled state of the brake actuator housing 1 before securing the first housing part 10 and the second housing part 20 in its coupled position by means of a locking element 30. The locking element 20 according to this embodiment is formed as a Spline, wherein the width of the spline 30 corresponds to the distance between two adjacent bayonet locking members 12, 22 of the first and second housing part 10, 20 in circumferential direction. Thus, as in particular shown in Fig. 4, the spline 30 can easily be inserted in the recess 40 defined between the first housing part 10 and the second housing part 20 in the shown coupled state of the brake actuator housing 1.

The width of the recess 40 is defined by the distance of two adjacent pairs of bayonet locking members 12, 22 being engaged with each other in the circumferential direction.

When the spline 30 is inserted in the recess 40 by means of a force acting in the direction of the longitudinal axis 11, the spline 30 locks the first housing part 10 and the second housing part 20 in its coupled position at least in a non-positive fit and preferably additionally in a positive fit.

Such a non-positive fit can, for example, be a frictional engagement between the inner circumferential surface 24 of the second housing part 20 and the spline 30 and additionally between the spline 30 and the outer circumferential surface 14 of the first housing part 10.

Fig. 4 illustrates the brake actuator housing 1 according to Fig. 1 in the part sectional view illustrating the brake actuator housing 1 in the coupled and locked state.

In this coupled and locked state the first housing part 10 and the second housing part 20 are coupled together by means of the number of first bayonet locking members 12 and the number of second bayonet locking members 22 being engaged with each other.

In this coupled state, the recess 40 is defined between an inner circumferential surface 24 of the second housing part and an outer circumferential surface 14 of the first housing part, wherein the width of the number of recesses is defined by the distance between two adjacent first and second bayonet locking members 12, 22 being engaged with each other. The locking element 30 fits in this recess 40 locking the first housing part 10 and the second housing part 20 by blocking any circumferential movement of the first housing part relative to the second housing part in order to disengage the bayonet locking members 12, 22 from each other.

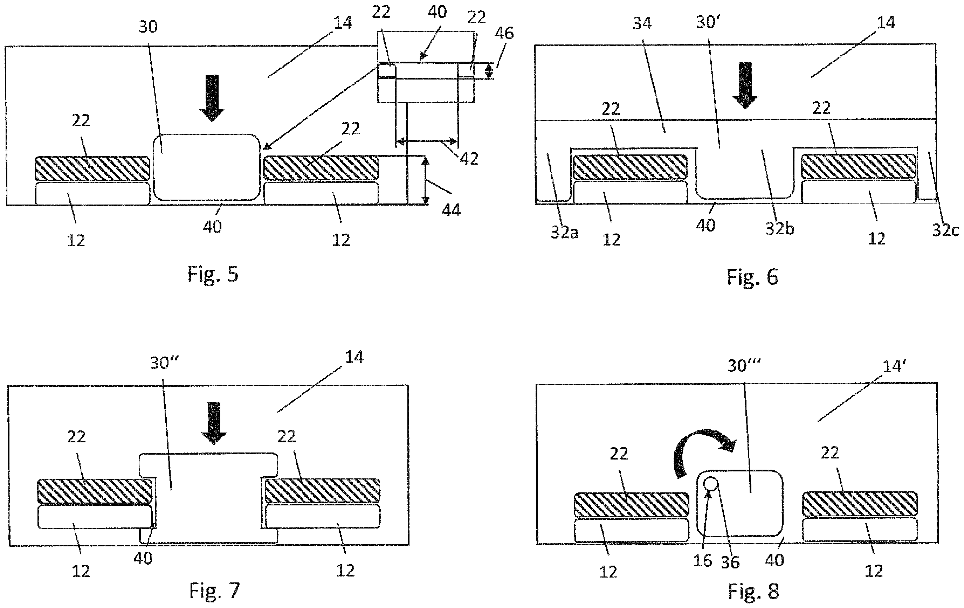

Fig. 5 illustrates a detailed view of a preferred embodiment of the locking element 30 for the brake actuator housing according to the embodiment shown in Fig. 1 in a coupled state of the brake actuator housing.

The bayonet locking members 12 of the first housing part are arranged on the outer circumferential surface 14. The number of second bayonet locking members 22 of the second housing part is engaged with the first bayonet locking members 12 in a positive fit.

In the coupled state of the brake actuator housing the recess 40 is defined between the outer circumferential surface 14 and the inner circumferential surface of the second housing part. The width of the recess is defined by the distance between two adjacent bayonet locking members 12 being engaged with the corresponding bayonet locking members 22 of the second housing part. The geometry of the locking element 30 corresponds to the recess and in particular the locking element 30 has a width that is close to the distance between the two pairs of engaged bayonet locking members 12, 22. The height of the locking element 30 exceeds the height of the first bayonet locking member 12 being engaged with the second bayonet locking member 22.

Thus, a movement of the first bayonet locking member 12 relative to the second bayonet locking member 22 in the circumferential direction is avoided by the locking element 30 that fits in the recess 40.

As in particular shown in the detailed view in Fig. 5, the recess 40 has a width 42 defined by the distance of two adjacent bayonet locking members 12, 22 of the first and the second housing part 10, 20 in the circumferential direction, a height 44 defined by the height of the bayonet locking member 12 of the first housing part 10 plus the height of the corresponding bayonet locking member 22 of the second housing part 20 in the axial direction, and a depth 46 defined by the distance of the first and the second housing part 10, 20 in radial direction in the space between the two adjacent bayonet locking members 12, 22 in the coupled state.

Fig. 6 illustrates a preferred alternative embodiment of the locking element for the brake actuator housing according to the embodiment shown in Fig. 1.

The locking element 30' is configured to engage at least two pairs of first bayonet locking members being engaged with corresponding second bayonet locking members.

The locking element 30' comprises a number of blocking parts 32a, 32b, 32c being positioned in the recess 40 and a base part 34 configured to connect the blocking parts 32a, 32b, 32c with each other.

Fig. 7 illustrates another alternative preferred embodiment of the locking element 30" for the brake actuator housing according to the embodiment shown in Fig. 1.

The locking element 30" comprises or consists of an elastic and preferably expandable material. The locking element 30" has been inserted in the recess 40 in a compressed state and after positioning in the recess 40 the locking element 30" has been expanded in order to lock the first and the second housing part in the coupled state of the brake actuator housing.

As the locking element 30" expands after being positioned in the recess 40, the first and second bayonet locking members 12, 22 being engaged with each other are at least partly enclosed by the locking element 30". Thus provides an increased safety of the coupled first and second housing part.

Fig. 8 illustrates a fourth preferred embodiment of the locking element 30‴ for the brake actuator housing according to the embodiment shown in Fig. 1.

The shown embodiment differs from the embodiments shown in Figs. 5 to 7 in that the locking element 30‴ has a retention member 36 that is configured to be engaged with a mounting interface 16 provided at the first housing part 10 and in particular the outer circumferential surface 14' to securely attach the locking element 30'" to the first housing part.

The retention member is formed as a cylindrical bore that can be engaged with the mounting-interface 16 formed as a pin. Thus, a rotational movement of the locking element 30‴ is allowed in order to position the locking element 30‴ in the recess 40 defined between two adjacent pairs of first and second bayonet locking members 12, 22, being engaged with each other in the way described before.

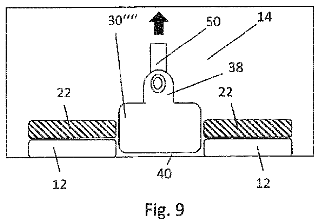

Fig. 9 illustrates a fifth preferred embodiment of the locking element 30ʺʺ for the brake actuator housing 1 according to in Fig. 1.

The embodiment of the locking element 30ʺʺ differs from the embodiments shown in Figs. 5 to 7 in that the locking element 30‴ has a front face being entirely inside the brake actuator housing in the coupled state and a rear face having an extraction-interface 38 being externally accessible.

The extraction-interface 38 is formed as a strap that can be engaged by an engagement member 50 for removing the locking element 30ʺʺ from the recess 40 in the coupled state of the brake actuator housing. For removing the locking element 30ʺʺ from its position in the recess 40, the locking element can be moved in axial direction along the longitudinal axis 11 by applying a tensile force on the strap by means of the engagement member 50.

### Reference Signs (Part of the description)

- 1: Brake actuator housing
- 10: first housing part
- 11: rotation axis
- 12: first bayonet locking members
- 13: collar
- 14, 14': outer circumferential surface
- 16: mounting-interface
- 20: second housing part
- 22: second bayonet locking members
- 23: flange
- 24: inner circumferential surface
- 30, 30', 30", 30‴: locking element
- 32a, 32b, 32c: blocking part
- 34: base part
- 36: retention member
- 38: extraction interface
- 40: recess
- 50: engagement member

## Claims

1. A brake actuator housing, in particular a spring brake actuator housing (1), comprising:
- a first housing part (10) having a longitudinal axis (11) and a number of first bayonet locking members (12), and
- a second housing part (20) having a number of second bayonet locking members (22),
wherein the bayonet locking members (12, 22) are configured to engage one another in a positive fit in a coupled state,
wherein the first and the second housing parts (20) are formed such that they define a recess (40) between them in the coupled state, the recess (40) being externally accessible, and
the brake actuator housing (1) comprises a locking element (30, 30', 30", 30"', 30"") that is dimensioned such that it fits in the recess (40), locking the first and the second housing part (10, 20) in the coupled state **characterized in that** the locking element (30, 30', 30", 30"', 30"") comprises or consists of an elastic and preferably expandable material, configured to be inserted in the recess (40) in a compressed state and to lock the first and the second housing part (10, 20) in an expanded state of the locking element (30, 30', 30", 30‴, 30ʺʺ).

2. Brake actuator housing (1) according to claim 1,
wherein the locking element (30, 30', 30", 30"', 30"") is engaged with the first and the second housing parts in the coupled state in a positive fit avoiding any movement in axial and circumferential directionand/or a non-positive fit by a frictional engagement.

3. Brake actuator housing (1) according to any one of the claims 1 to 2,
wherein the recess (40) is defined by the space between two adjacent bayonet locking members (12, 22) of the first and the second housing part (10, 20) in the coupled state, the recess (40) preferably having:
a width (42) defined by the distance of two adjacent bayonet locking members (12, 22) of the first and the second housing part (10, 20) in the circumferential direction,
a height (44) defined by the height of the bayonet locking member (12) of the first housing part (10) plus the height of the corresponding bayonet locking member (22) of the second housing part (20) in the axial direction, and
a depth (46) defined by the distance of the first and the second housing part (10, 20) in the radial direction in the space between the two adjacent bayonet locking members (12, 22) in the coupled state.

4. Brake actuator housing (1) according to any one of the proceeding claims,
wherein the locking element (30, 30', 30", 30"', 30"") is engaged with at least two adjacent bayonet locking members (12, 22) of the first and second housing parts (10, 20) in the coupled state in a positive fit.

5. Brake actuator housing (1) according to any one of the proceeding claims,
wherein the locking element (30, 30', 30", 30"', 30"") has a retention member (36) configured to securely attach the locking element (30, 30', 30", 30‴, 30ʺʺ) to the first housing part (10) and/or the second housing part (20).

6. Method for assembling a brake actuator housing, in particular a brake actuator housing (1) according to any one of the claims 1 to 5,
wherein the brake actuator housing (1) comprises:
- a first housing part (10) having a longitudinal axis (11) and a number of first bayonet locking members (12)
- a second housing part (20) having a number of second bayonet locking members (22)
wherein the first and the second housing parts are formed such that they define a recess (40) between them in the coupled state, the recess (40) being externally accessible, and
- a locking element (30, 30', 30", 30"', 30ʺʺ) that is dimensioned such that it fits in the recess (40),
the method comprising the steps:
- moving the first housing part (10) towards the second housing part (20) in the direction of the longitudinal axis,
- rotating the first housing part (10) relative to the second housing part (20) around the longitudinal axis (11), such that the bayonet locking members (12, 22) engage one another in a positive fit, and the first and the second housing parts (10, 20) are coupled together,
- inserting the locking element (30, 30', 30", 30‴, 30ʺʺ) in the recess (40) formed between the first and the second housing part (10, 20) in the coupled state, such that the locking element (30, 30', 30", 30"', 30ʺʺ) locks the first and the second housing part (10, 20) in the coupled state.

## Patentansprüche

1. Bremsaktuatorgehäuse, insbesondere ein Federspeicherbremsaktuatorgehäuse (1), das Folgendes umfasst:
- ein erstes Gehäuseteil (10) mit einer Längsachse (11) und einer Anzahl von ersten Bajonettverriegelungskomponenten (12) und
- ein zweites Gehäuseteil (20) mit einer Anzahl von zweiten Bajonettverriegelungskomponenten (22),
wobei die Bajonettverriegelungskomponenten (12, 22) dazu ausgelegt sind, in einem gekoppelten Zustand formschlüssig ineinanderzugreifen,
wobei das erste und das zweite Gehäuseteil (20) derart gebildet sind, dass sie im gekoppelten Zustand eine Ausnehmung (40) zwischen sich definieren, wobei die Ausnehmung (40) von außen zugänglich ist, und
das Bremsaktuatorgehäuse (1) umfasst ein Verriegelungselement (30, 30', 30", 30"', 30""), das derart dimensioniert ist, dass es in die Ausnehmung (40) passt, und das erste und das zweite Gehäuseteil (10, 20) im gekoppelten Zustand verriegelt, **dadurch gekennzeichnet, dass** das Verriegelungselement (30, 30', 30", 30"', 30ʺʺ) ein elastisches und vorzugsweise dehnbares Material umfasst oder aus demselben besteht, das dazu ausgelegt ist, in einem komprimierten Zustand in die Ausnehmung (40) eingesteckt zu sein und in einem gedehnten Zustand des Verriegelungselements (30, 30', 30", 30"', 30"") das erste und das zweite Gehäuseteil (10, 20) zu verriegeln.

2. Bremsaktuatorgehäuse (1) nach Anspruch 1,
wobei das Verriegelungselement (30, 30', 30", 30"', 30"") im gekoppelten Zustand mit dem ersten und dem zweiten Gehäuseteil in formschlüssigem Eingriff ist, wodurch eine Bewegung in Axial- und Umfangsrichtung vermieden wird, und/oder mittels Reibeingriff in nicht formschlüssigem Eingriff ist.

3. Bremsaktuatorgehäuse (1) nach einem der Ansprüche 1 bis 2,
wobei die Ausnehmung (40) durch den Raum zwischen zwei benachbarten Bajonettverriegelungskomponenten (12, 22) des ersten und des zweiten Gehäuseteils (10, 20) im gekoppelten Zustand definiert ist, wobei die Ausnehmung (40) vorzugsweise Folgendes aufweist:
eine Breite (42), die durch den Abstand von zwei benachbarten Bajonettverriegelungskomponenten (12, 22) des ersten und des zweiten Gehäuseteils (10, 20) in der Umfangsrichtung definiert ist,
eine Höhe (44), die durch die Höhe der Bajonettverriegelungskomponente (12) des ersten Gehäuseteils (10) plus der Höhe der entsprechenden Bajonettverriegelungskomponente (22) des zweiten Gehäuseteils (20) in der Axialrichtung definiert ist, und
eine Tiefe (46), die durch den Abstand des ersten und des zweiten Gehäuseteils (10, 20) in der Radialrichtung im Raum zwischen den zwei benachbarten Bajonettverriegelungskomponenten (12, 22) im gekoppelten Zustand definiert ist.

4. Bremsaktuatorgehäuse (1) nach einem der vorhergehenden Ansprüche,
wobei das Verriegelungselement (30, 30', 30", 30"', 30"") im gekoppelten Zustand mit mindestens zwei benachbarten Bajonettverriegelungskomponenten (12, 22) des ersten und des zweiten Gehäuseteils (10, 20) in formschlüssigem Eingriff ist.

5. Bremsaktuatorgehäuse (1) nach einem der vorhergehenden Ansprüche,
wobei das Verriegelungselement (30, 30', 30", 30"', 30"") eine Haltekomponente (36) aufweist, die dazu ausgelegt ist, das Verriegelungselement (30, 30', 30", 30"', 30"") sicher am ersten Gehäuseteil (10) und/oder am zweiten Gehäuseteil (20) zu befestigen.

6. Verfahren zum Zusammenbauen eines Bremsaktuatorgehäuses, insbesondere eines Bremsaktuatorgehäuses (1) nach einem der Ansprüche 1 bis 5,
wobei das Bremsaktuatorgehäuse (1) Folgendes umfasst:
- ein erstes Gehäuseteil (10) mit einer Längsachse (11) und einer Anzahl von ersten Bajonettverriegelungskomponenten (12)
- ein zweites Gehäuseteil (20) mit einer Anzahl von zweiten Bajonettverriegelungskomponenten (22)
wobei das erste und das zweite Gehäuseteil derart gebildet sind, dass sie im gekoppelten Zustand eine Ausnehmung (40) zwischen sich definieren, wobei die Ausnehmung (40) von außen zugänglich ist, und
- ein Verriegelungselement (30, 30', 30", 30"', 30""), das derart dimensioniert ist, dass es in die Ausnehmung (40) passt,
wobei das Verfahren die folgenden Schritte umfasst:
- Bewegen des ersten Gehäuseteils (10) in die Richtung der Längsachse zum zweiten Gehäuseteil (20),
- Drehen des ersten Gehäuseteils (10) relativ zum zweiten Gehäuseteil (20) um die Längsachse (11), derart, dass die Bajonettverriegelungskomponenten (12, 22) in formschlüssigem Eingriff miteinander sind und das erste und das zweite Gehäuseteil (10, 20) zusammengekoppelt sind,
- Einstecken des Verriegelungselements (30, 30', 30", 30‴, 30ʺʺ) in die Ausnehmung (40), die im gekoppelten Zustand zwischen dem ersten und dem zweiten Gehäuseteil (10, 20) gebildet ist, derart, dass das Verriegelungselement (30, 30', 30", 30"', 30"") das erste und das zweite Gehäuseteil (10, 20) im gekoppelten Zustand verriegelt.

## Revendications

1. Boîtier d'actionneur de frein, en particulier un boîtier d'actionneur de frein à ressort (1), comprenant :
une première partie de boîtier (10) ayant un axe longitudinal (11) et un certain nombre de premiers éléments de verrouillage à baïonnette (12), et
une seconde partie de boîtier (20) ayant un certain nombre de seconds éléments de verrouillage à baïonnette (22),
dans lequel les éléments de verrouillage à baïonnette (12, 22) sont configurés pour se mettre en prise entre eux par complémentarité de forme à un état couplé,
dans lequel les première et seconde parties de boîtier (20) sont formées de sorte qu'elles définissent un évidement (40) entre elles à l'état couplé, l'évidement (40) étant extérieurement accessible, et
le boîtier d'actionneur de frein (1) comprend un élément de verrouillage (30, 30', 30", 30‴, 30ʺʺ) qui est dimensionné de sorte qu'il s'adapte dans l'évidement (40), verrouillant la première et la seconde partie de boîtier (10, 20) à l'état couplé, **caractérisé en ce que** l'élément de verrouillage (30, 30', 30", 30‴, 30ʺʺ) comprend ou se compose d'un matériau élastique et de préférence expansible, configuré pour être inséré dans l'évidement (40) dans un état comprimé et pour verrouiller la première et la seconde partie de boîtier (10, 20) dans un état expansé de l'élément de verrouillage (30, 30', 30", 30‴, 30ʺʺ).

2. Boîtier d'actionneur de frein (1) selon la revendication 1,
dans lequel l'élément de verrouillage (30, 30', 30", 30‴, 30ʺʺ) est mis en prise avec la première et la seconde partie de boîtier à l'état couplé par complémentarité de forme évitant tout mouvement dans les directions axiale et circonférentielle et/ou sans complémentarité de forme par une mise en prise par friction.

3. Boîtier d'actionneur de frein (1) selon l'une quelconque des revendications 1 et 2, dans lequel l'évidement (40) est défini par l'espace entre deux éléments de verrouillage à baïonnette (12, 22) adjacents de la première et de la seconde partie de boîtier (10, 20) à l'état couplé, l'évidement (40) ayant de préférence :
une largeur (42) définie par la distance de deux éléments de verrouillage à baïonnette (12, 22) adjacents de la première et de la seconde partie de boîtier (10, 20) dans la direction circonférentielle,
une hauteur (44) définie par la hauteur de l'élément de verrouillage à baïonnette (12) de la première partie de boîtier (10) plus la hauteur de l'élément de verrouillage à baïonnette (22) correspondant de la seconde partie de boîtier (20) dans la direction axiale, et
une profondeur (46) définie par la distance de la première et de la seconde partie de boîtier (10, 20) dans la direction radiale dans l'espace entre les deux éléments de verrouillage à baïonnette (12, 22) adjacents à l'état couplé.

4. Boîtier d'actionneur de frein (1) selon l'une quelconque des revendications précédentes,
dans lequel l'élément de verrouillage (30, 30', 30", 30‴, 30ʺʺ) est mis en prise avec au moins deux éléments de verrouillage à baïonnette (12, 22) adjacents de la première et de la seconde partie de boîtier (10, 20) à l'état couplé par complémentarité de forme.

5. Boîtier d'actionneur de frein (1) selon l'une quelconque des revendications précédentes,
dans lequel l'élément de verrouillage (30, 30', 30", 30‴, 30ʺʺ) a un élément de retenue (36) configuré pour fixer, en toute sécurité, l'élément de verrouillage (30, 30', 30", 30‴, 30ʺʺ) à la première partie de boîtier (10) et/ou à la seconde partie de boîtier (20).

6. Procédé pour assembler un boîtier d'actionneur de frein, en particulier un boîtier d'actionneur de frein (1) selon l'une quelconque des revendications 1 à 5,
dans lequel le boîtier d'actionneur de frein (1) comprend :
une première partie de boîtier (10) ayant un axe longitudinal (11) et un certain nombre de premiers éléments de verrouillage à baïonnette (12),
une seconde partie de boîtier (20) ayant un certain nombre de seconds éléments de verrouillage à baïonnette (22),
dans lequel la première et la seconde partie de boîtier sont formées de sorte qu'elles définissent un évidement (40) entre elles à l'état couplé, l'évidement (40) étant extérieurement accessible, et
un élément de verrouillage (30, 30', 30", 30‴, 30ʺʺ) qui est dimensionné de sorte qu'il s'adapte dans l'évidement (40),
le procédé comprenant les étapes consistant à :
déplacer la première partie de boîtier (10) vers la seconde partie de boîtier (20) dans la direction de l'axe longitudinal,
faire tourner la première partie de boîtier (10) par rapport à la seconde partie de boîtier (20) autour de l'axe longitudinal (11), de sorte que les éléments de verrouillage à baïonnette (12, 22) se mettent en prise entre eux par complémentarité, et la première et la seconde partie de boîtier (10, 20) sont couplées ensemble,
insérer l'élément de verrouillage (30, 30', 30", 30‴, 30ʺʺ) dans l'évidement (40) formé entre la première et la seconde partie de boîtier (10, 20) à l'état couplé, de sorte que l'élément de verrouillage (30, 30', 30", 30‴, 30ʺʺ) verrouille la première et la seconde partie de boîtier (10, 20) à l'état couplé.
